# EUROPEAN PATENT SPECIFICATION

(11) **EP 0 343 646 B1**
(45) Date of publication and mention of the grant of the patent: **13.12.1995**
(21) Application number: 89109410.4
(22) Date of filing: 24.05.1989
(51) Int. Cl.: G06F 9/46

(54) **Task execution control method for a multiprocessor system with enhanced post/wait procedure**
Taskausführungssteuerverfahren für ein Multiprozessorsystem mit Post/Warte-Prozedur
Méthode pour la commande d'exécution de tâche pour un système multiprocesseur avec procédure d'enregistrement et d'attente

(30) Priority: 26.05.1988 JP 127150/88; 26.12.1988 JP 325796/88
(43) Date of publication of application: 29.11.1989
(73) Proprietor: HITACHI, LTD., Chiyoda-ku, Tokyo 100 (JP); HITACHI MICROCOMPUTER SYSTEM LTD., Kodaira-shi, Tokyo (JP)
(72) Inventor: Iwasaki, Masaaki Hitachi Koyasudai Apartment E203, Hachioji-shi (JP); Takamoto, Yoshifumi, Hachioji-shi, Tokyo 192 (JP); Yamamoto, Shoji, Hachioji-shi, Tokyo 192 (JP); Sumiyoshi, Takashi, Yokohama (JP); Masai, Kazuo, Yokohama (JP); Shinozaki, Toshiharu, Yokohama (JP); Saito, Tetsuo, Zama-shi (JP)
(74) Representative: Strehl Schübel-Hopf Groening & Partner

(56) References cited:
- IBM TECHNICAL DISCLOSURE BULLETIN. vol. 26, no. 3A, August 1983, NEW YORK US page 985; K.F.KELLY JR.: 'Device fencing'
- IBM TECHNICAL DISCLOSURE BULLETIN. vol. 18, no. 6, November 1975, NEW YORK US pages 1942 - 1947; GILBERT AND KEARNEY: 'Priority control method for a resource partitioning system.'
- IBM TECHNICAL DISCLOSURE BULLETIN. vol. 30, no. 5, October 1987, NEW YORK US pages 373 - 374; 'Selective dispatch of queued tasks.'

## Description

### BACKGROUND OF THE INVENTION

This invention relates to a multiprocessor computer system, and particularly, to a lock management scheme for shared resources.

A unit of processing (task) executed in a computer system uses various shared resources. A system, such as a multiprocessor system, in which a plurality of tasks run concurrently, encounters contentions over the exclusive use of shared resources among the tasks, and therefore lock management is required. For example, when a plurality of tasks in an online system are running for the sales processing, these tasks make reference and revise the "current sales amount" in a common storage area individually. In this situation, when one task is making reference and revising the "current sales amount", other tasks must be inhibited from accessing to the data.

Many of the prevalent computer systems have, as a basic function of lock management, a hardware-based support of instruction which execute one-word reference-and-revision operations as unseparable operations, e.g., TEST AND SET instructions (TS instruction) and COMPARE AND SWAP instruction (CS instruction), as described in publication entitled "Computer Architecture and Parallel Processing", pp. 559-560, by K. Hwang and F.A. Briggs, published by McGraw Hill. However, a shared resource dealt with by lock management is not necessarily one word in the memory, and possibly it cannot be confined in one word as in the case of a disk-based data base.

Generally, lock management for the above-mentioned shared resources takes place as follows. The memory is provided, in addition to the areas for storing data of shared resources (numerous data A, B, C and so on of several K bytes each), a reference table, and one-word reference information (lock words) is stored in the table in correspondence to the shared data A, B, C and so on, so that the data are accessed for reference through the lock words.

The lock management for the data of shared resources can be accomplished by setting the exclusive-use (lock) flag in the lock word using the CS instruction or the like. At the beginning, the flag of lock word is initialed (to 0 for example) so that it indicates that the shared resource is unlocked. A task which intends to lock the shared resource makes reference to the lock word using the CS instruction, and sets the flag to 1 if it is 0. On completion of exclusive use of the shared resource, the task resets the lock word to 0.

During the period when one processor makes reference to a lock word using the CS instruction, other processors are inhibited, on a hardware basis, to access to the lock word. Revision of a lock word fails unless it has been reset to 0. A task which has failed to revise the lock word, i.e., to lock the shared resource, using the CS instruction retries access repeatedly until it revises the lock word successfully. In the following discussion, the acquisition of the right of using a shared resource exclusively will be termed "lock a resource", "have a lock of a resource", etc. The failure in locking a resource due to the exclusive use of it by other task will be termed "lock failure", "fail in lock acquisition", etc.

For the lock management in consideration of retries in the case of lock failure, many prevalent computer systems employ the spin lock mechanism or wait/post mechanism, as described in JP-A-59-154563, JP-A-60-128537, and JP-A-62-173535.

The spin lock mechanism is to repeat retries in a loop until the task locks the resource. Namely, a task in need of a shared resource uses a processor exclusively and runs in a retry loop (spin loop) formed of a sequence of several instructions until it can lock the intended resource.

The wait/post mechanism is also called the suspend/resume mechanism, block/activate mechanism, sleep/wakeup mechanism, etc., and it carries out the wait procedure to bring a lock-failing task into wait state and then invoke the post procedure to restore the task to ready state, thereby accomplishing the lock management. Namely, the system for the mutual exclusion control of shared resources comprises a wait procedure which, when a shared resource is locked by a task 1, brings a lock-failing task 2 into wait state, and a post procedure which frees the task 2 from wait state when the task 1 (or a task which has used the shared resource after the task 1) releases the resource.

In the following discussion, "running state" denotes that a task is in execution through the exclusive use of a processor, and "ready state" denotes that a task is waiting for an available processor, i.e., the task is ready to run as soon as any of processors in the system becomes available. "Wait state" denotes that a task cannot be executed on a processor until it becomes ready upon removal of the wait-causing event; for example, a task which has issued a wait macro because of failure in resource lock enters wait state until it is posted. "Preempted state" is a sort of ready state, and it denotes that the execution is suspended due to an interrupt procedure or the like.

A task which has failed in resource lock transfers control to the wait procedure routine. The wait procedure routine places the lock-failing task in wait state and invokes the dispatcher. The dispatcher dispatches another task in ready state a processor which has been executing a task that has entered the wait state. In case more than one ready task exists, the dispatcher selects a ready task for the processor depending on the predetermined priority-based schedule or dispatch algorism.

Each task checks the presence of tasks in wait state (waiting tasks) immediately before releasing (unlocking) the shared resource and, upon detecting a waiting task, transfers control to the post procedure routine. The post procedure routine restores the ready state of the waiting task. The restored task is thereafter dispatched a processor by the dispatcher, and it locks a shared resource and resumes the processing.

In the following discussion, a task which initiates the post procedure will be termed a "post issue task" and a task which is rid of the wait state will be termed a "post receive task". The post issue task, post receive task and wait task are not particular tasks having these names. Instead, any task can become a post issue task or a post receive task in each occasion.

### SUMMARY OF THE INVENTION

The foregoing two lock management systems, i.e, spin lock mechanism and wait/post mechanism, involve a problem in that the number of dynamic steps expended for the execution of a task increases by the occurrence of lock contentions among tasks. Namely, a multiprocessor system has an increased number of dynamic steps of execution per task as compared with task execution by a single processor. The reason for the increased number of dynamic steps resides in an increased overhead of spin procedure or wait/post procedure due to lock contentions and an increased overhead of dispatch procedure attributable to the increase in wait/post procedures.

Accordingly, a first object of this invention as set forth in claim 1 is to overcome the foregoing prior art deficiencies and provide a lock management system which allows a third-party task to use a shared resource during a period after a post receive task has been granted a CPU by the dispatcher until it enters ready status, thereby reducing the lock fail rate.

A second object of this invention is to provide a lock management system which prevents the sinking of locking tasks.

A third object of this invention is to provide a lock management system which reduces the lock fail rate and reduces the overhead of dispatch procedure caused by the secondary lock contention on the task scheduling queue.

A fourth object of this invention is to provide a lock management system which reduces the increase in spin procedures caused by an extended lock periods due to an interrupt.

According to this invention, a shared resource, which has been used by a post issue task, is released upon completion of the use, thereby allowing a third task in execution on other processor to lock the resource, and thereafter a post receive task is made ready by the post procedure, and thereafter a task which has failed to lock the resource is granted by the dispatch procedure to use the processor, and the post receive task is prompted to retry to lock the shared resource.

According to another aspect of this invention, the execution of a post issue task is suspended after a post receive task is rid of the wait state by the post procedure, and the processor on which the post issue task has been running is dispatched to the post receive task.

According to a further aspect of this invention, the execution of a post issue task is suspended after a post receive task has been made ready by the post procedure, control information pertinent to the post issue task is registered, the processor which has been running the post issue task is dispatched to the post receive task, a third task which has failed in resource lock is made ready by the wait procedure following the registration, the registered control information pertinent to the post issue task is retrieved, and the processor which has been running the third task is dispatched to the post issue task.

According to a further aspect of this invention, when the execution of a locking task is suspended by an external interrupt, information indicative of the status of discontinuity is stored as information on the execution status of the locking task, allowing a lock-intending task to reference the information so that it tries a spin-based locking when the locking task is in execution, or tries a wait/post-based locking when the locking task is suspended.

### BRIEF DESCRIPTION OF THE DRAWINGS

Fig. 1A is a brief flowchart of the lock procedure and unlock procedure of the task execution control embodying the present invention;
Fig. 1B is a brief flowchart of the wait procedure of the above embodiment;
Fig. 1C is a brief flowchart of the post procedure of the above embodiment;
Fig. 1D is a brief flowchart of the dispatch procedure of the above embodiment;
Fig. 1E is a brief flowchart of the interrupt trap procedure of the above embodiment;
Fig. 2 is a detailed flowchart of the lock procedure shown in Fig. 1A;
Fig. 3 is a detailed flowchart of the unlock procedure shown in Fig. 1A;
Fig. 4 is a diagram showing the structure of the task scheduling queue;
Fig. 5 is a diagram showing the structure of the resource wait queue;
Fig. 6 is a diagram showing the structure of the processor wait queue;

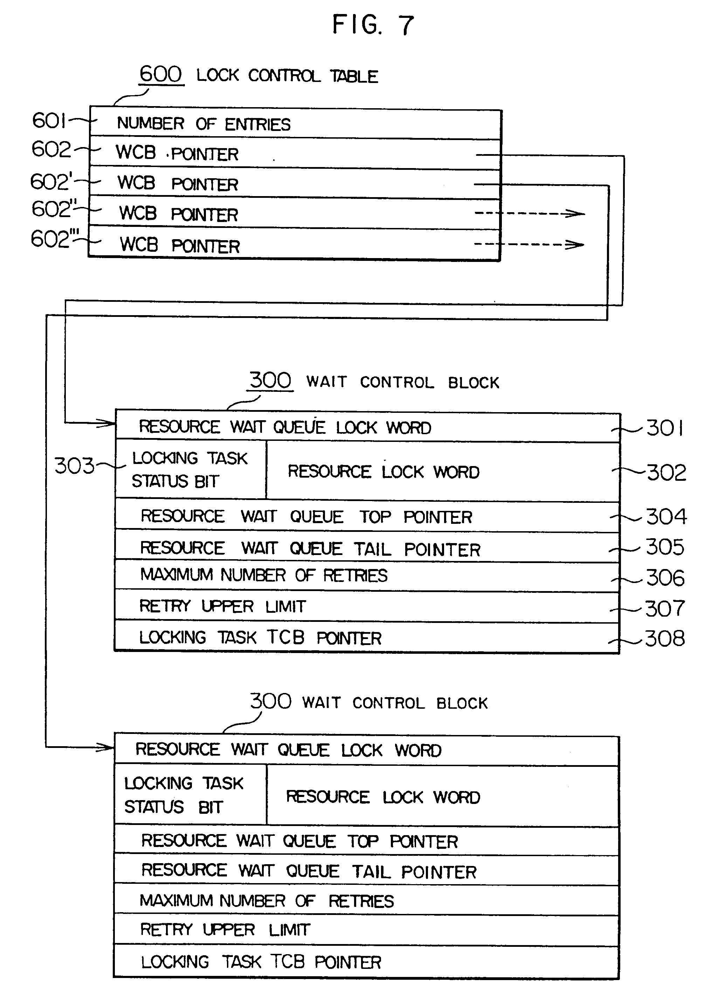

Fig. 7 is a diagram showing the structure of the lock control table;
Fig. 8 is a brief block diagram of the online data base system to which this invention is applied;
Fig. 9 is a timing chart showing the progress of task execution under the conventional task execution control;
Fig. 10 is a timing chart showing the progress of other execution under the conventional task execution control;

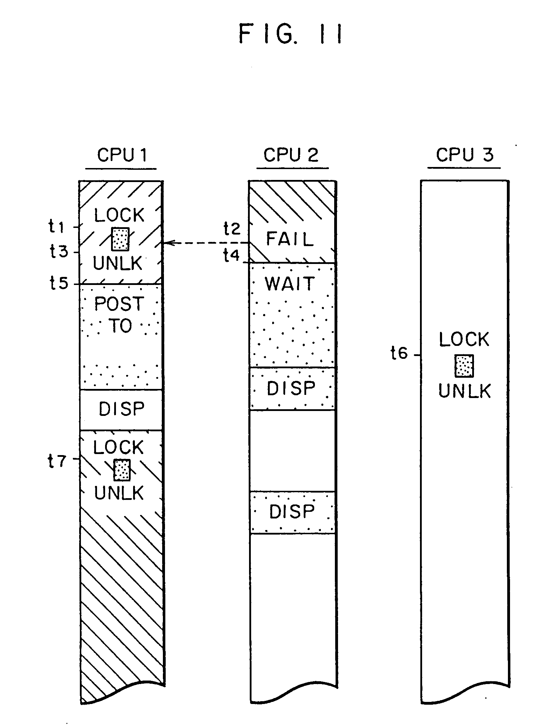

Fig. 11 is a timing chart showing the progress of task execution according to an embodiment of this invention;
Fig. 12 is a timing chart showing the progress of other execution based on the prior art;
Fig. 13 is a timing chart showing the progress of other execution based on the embodiment of this invention; and
Fig. 14 is a timing chart showing the progress of other execution based on the embodiment of this invention.

### DESCRIPTION OF THE PREFERRED EMBODIMENT

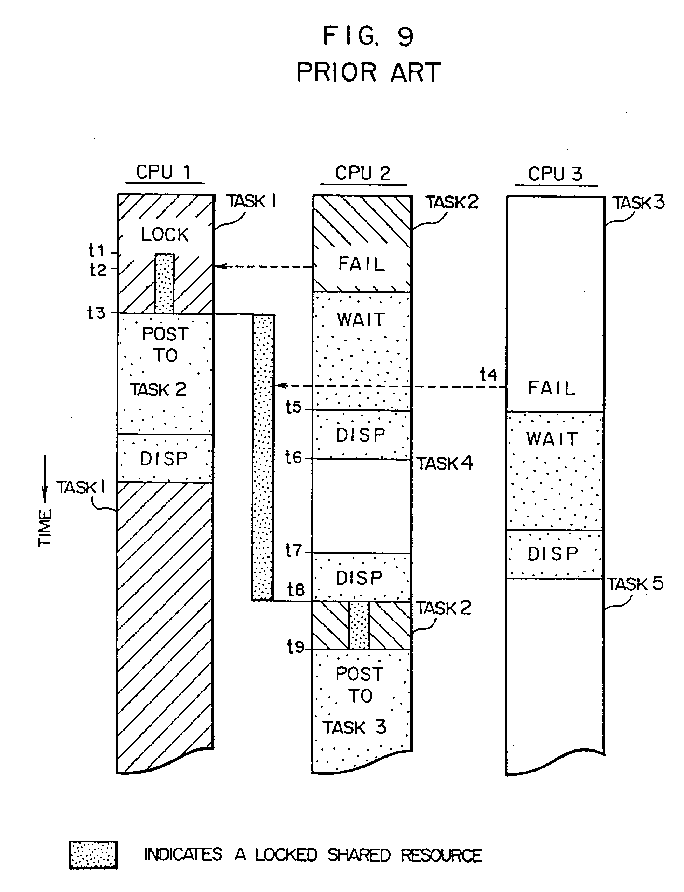

Before entering into the explanation of this invention, the prior art problems will be described in more detail with reference to Fig. 9.

The figure is a timing chart, with its time axis running downward, showing as an example the task operation at the occurrence of a lock contention, according to the conventional system. The figure shows the execution of tasks 1, 2, 3, 4, 5 and so on by three CPUs 1, 2 and 3. A hatched section directing from top right to bottom left is the task 1, a hatched section directing from top left to bottom right is the task 2, blank sections are third tasks (tasks 3 to 5), thin doted sections are parts of a supervisor which does not belong to any task (it performs linkage among the tasks), and thick doted sections indicate that the shared resources are locked. Label LOCK indicates a lock procedure, POST indicates a post procedure, FAIL indicates a lock failure by a task, and DISP indicates a dispatch procedure for the task indicated by it.

At the beginning, the task 1 locks a resource on CPU 1 (at time t₁), and next the task 2 fails in lock (at t₂) and enters wait state. Viewing the events, the task 1 terminates the lock upon ending the use of the shared resource and issues a post procedure to the task 2 (at t₃). Now, the task 2 locks the shared resource, but it is not granted a CPU (right of using a CPU) at this time point and it does not enter the running state immediately (stays in ready state). Because of the priority ranks of ready tasks, the task dispatched when a CPU becomes available is not necessarily the task 2 which has just acquired the resource. For example, when the CPU 2 becomes available the task 4 at a higher execution rank can be dispatched (at t₅-t₆) and executed (at t₆-t₇) earlier. In this case, after the execution of the task 4 has completed, the task 2 is dispatched and executed (at t₇-t₈-t₉). During the period after the post procedure issuance by the task 1 to task 2 until it enters the running state (at t₃-t₈), a lock request issued by other task on other CPU, such as the task 3, (at t₄), will fail even though the shared resource is not used by any task. In addition, when the task 2 has a post reception at t₃, if a higher-ranking task such as the task 4 is running, the task 2 is not granted to use the CPU until the execution of task 4 completes.

In the example of Fig. 9, the CPU 1 and CPU 2 carry out the dispatch procedures concurrently at time around t₆. Similarly, the CPU 2 and CPU 3 carry out the dispatch procedures concurrently at time around t₃. In the dispatch procedure, the task scheduling queue which administrates control information of all tasks in the system must be locked until a task to be dispatched next is determined from among a plurality of ready tasks. If dispatchers operate concurrently on several processors as shown in Fig. 9 a lock contention will occur on the task scheduling queue. This secondary lock contention increases the number of steps needed for the dispatch procedure, and further increases the number of dynamic steps per task.

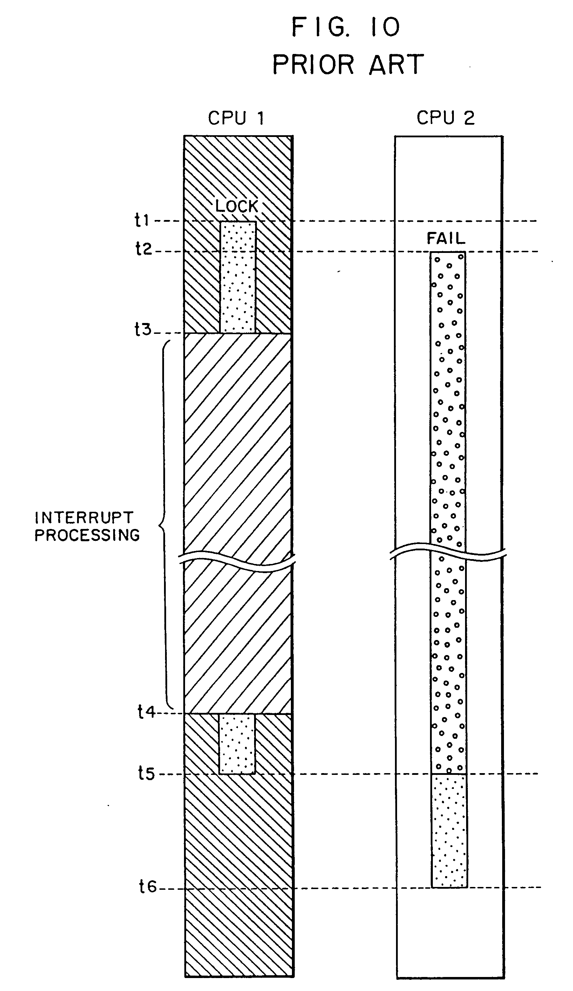

In addition to the above problems, a cause of aggravating the lock contention is the virtual increase in the lock period due to the suspension of a locking task caused by an external interrupt or the like. The following describes this problem using Fig. 10, which is another example of the task operation.

On a CPU 1 shown on the left-hand side of the figure, a task 1 (hatched section) locks a resource at t₁ and it keeps the resource until t₅. The execution of the task 1 is suspended in its course at t₃ by an interrupt procedure (thin dotted section) until t₄. Another task 2 running on a CPU 2 shown on the right-hand side of the figure attempts to lock the resource at t₂, but it fails as the resource is locked by the task 1 and it enters the spin loop. The task 2 continues spinning until t₅ when the task 1 releases the resource, and the CPU 2 is kept occupied by the task 2 only for the spin procedure. The duration between t₃ to t₄ is incomparably longer (several times to several tens times) than the lock period of task 1: (t₃-t₁)+(t₅-t₄), leaving the CPU 2 to idle except for doing the spin procedure.

The situation is summarized as follows.
Subject 1
   In the conventional wait/post mechanism, during the period after a post issue task (task 1 in this case) has commenced the post procedure until a post receive task (task 2 in this case) has a processor and starts running, other task than the post receive task is not allowed to use the resource, therefore a ratio of lock procedure to the whole procedure becomes high, and a system performance is degraded. Particularly, in a multiprocessor system, during the period after a post issue task has commenced the post procedure until a post receive task has been dispatched of processor and starts running, other tasks running on other processors issue lock requests, causing the lock fail rate (the probability of failing lock attempts) to rise and the post procedure and wait procedure to have increased overhead.
Subject 2
   In the conventional wait/post mechanism, when a post receive task is rid of wait state and made ready, if a higher ranking task exists, the processor is dispatched to it first, and therefore the post receive task is not granted the processor promptly. This situation will be called "sinking of locking task". In the presence of a sink locking task, if another task attempts a resource lock, it always fails, resulting in an increased overhead of the post procedure and wait procedure.
Subject 3
   The frequency of task switch increases in proportion to the increase in the wait/post procedure, resulting in an increased number of dispatch procedures. The dispatcher must lock the task scheduling queue, which administrates control information of all tasks in the system, until a task to be dispatched next is determined from among a plurality of ready tasks. This lock procedure is essentially inevitable for updating the task scheduling queue. In a multiprocessor system, where dispatchers operate concurrently on individual processors, an increase in the frequency of dispatch procedure can trigger lock contentions on the task scheduling queue. Such secondary lock contentions increase the number of steps required for the dispatch procedure, and further increases the number of dynamic steps per task.
Subject 4
   The occurrence of an interrupt during a resource lock virtually prolongs the lock period due to the interrupt procedure. Moreover, upon completion of the interrupt procedure, the processor can be dispatched to other higher ranking task, resulting in the sinking of the interrupted task. Particularly, in the spin lock mechanism, many lock requesting tasks will enter the spin loop one after another during an interrupt procedure or during the sinking of a locking task.

### (1) Overview

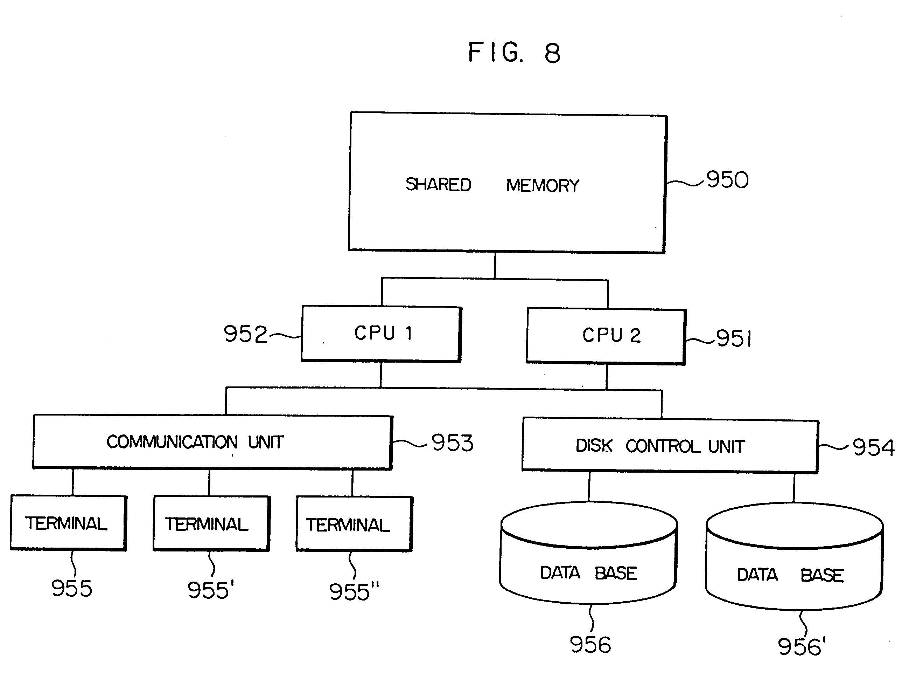

Fig. 8 shows in block diagram the online data base system to which the present invention is applied. In the system, a first processor 952 and second processor 954 are linked through a shared memory 950. The two processors operate in parallel by executing programs in the shared memory 950 and using data in the memory 950. The shared memory 950 also stores a task scheduling queue, resource wait queue, processor wait queue, lock control queue, etc. used for the dispatch procedure and lock control procedure. Each procedure transacts data with terminal units 955 by way of a communication unit 953 and has access to a disk-based data base 956 by way of a disk control unit 954.

An event of data reference and/or revision procedure in the online data base system is called "transaction". For example, a series of processings for the withdrawal of deposit, including the confirmation of the balance, subtraction of the withdrawed amount from the balance and revising the balance in the data base, is a transaction. A transaction is initiated by data transmission from a terminal unit. In response to the entry of a transaction, the supervisor creates one or more tasks for the transaction. Specifically, the supervisor creates a task control block (TCB) 200 which contains task-specific control information, and administrates the TCB on the task scheduling queue until the end of the transaction. Each task registered on the task scheduling queue takes any of the wait state, ready state, preempted state and running state. A waiting task is waiting the allowance of using a shared resource, and in this status it is not granted a processor for execution. For example, a task which cannot have a resource and issues a wait macro stays in wait state until it is posted. A ready task is waiting the dispatch of any available processor in the system. Conventionally, a waiting task does not become ready unless it locks a resource, whereas it is not always true in the embodiment of this invention. Suspended state is a sort of ready state, in which the task execution is discontinued due to an interrupt procedure or the like. A running task is a task which is in execution by a processor dispatched to it.

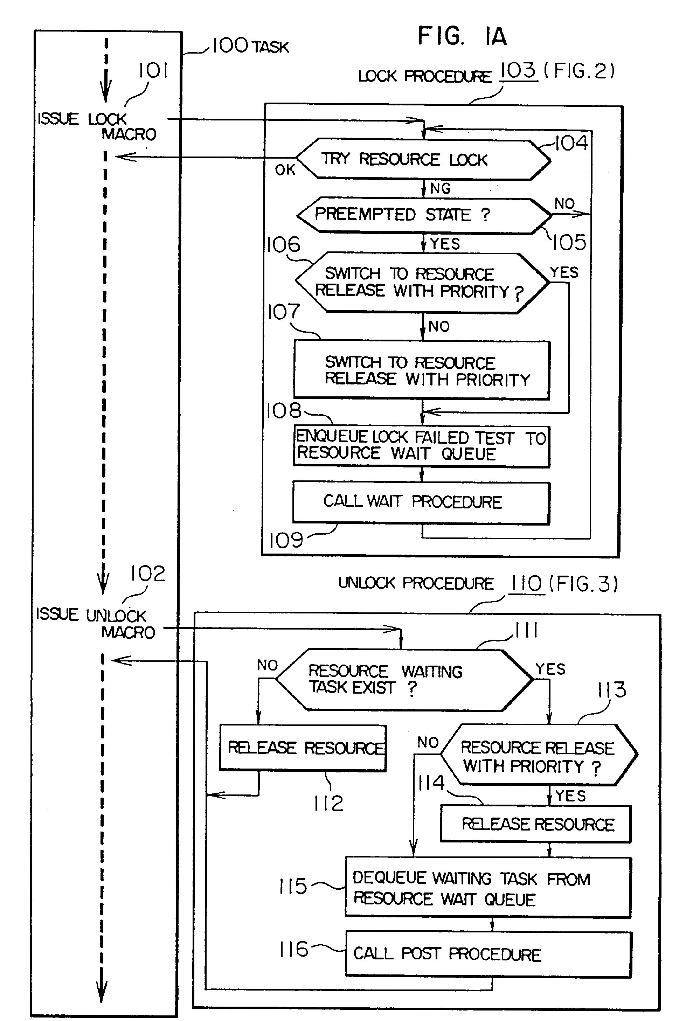

Fig. 1A shows in brief the lock procedure 103 and unlock procedure 110 based on this embodiment.

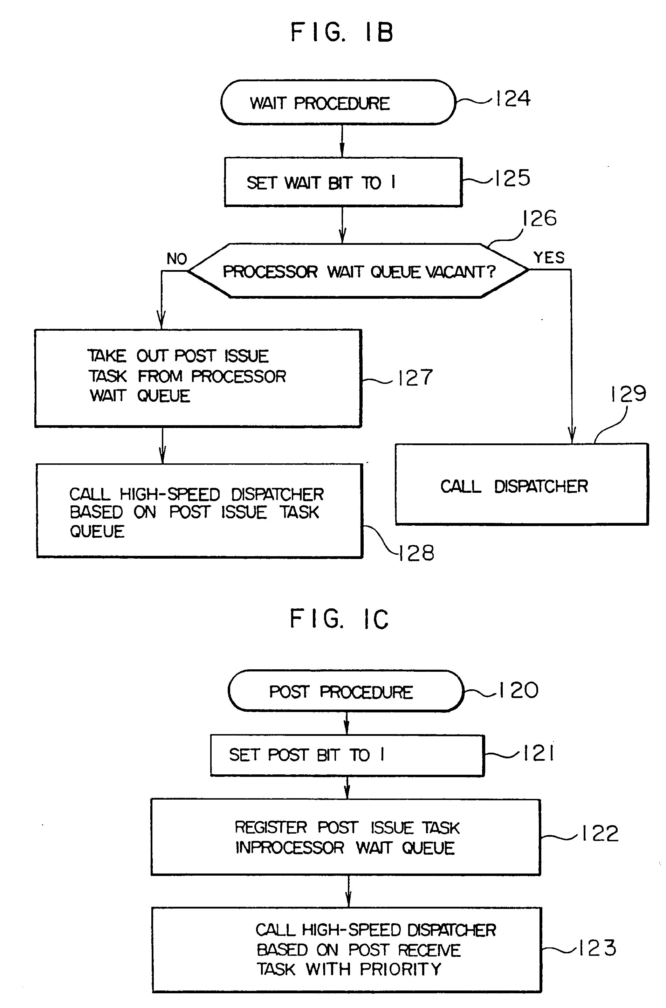

Fig. 1B shows in brief the wait procedure which is initiated by the lock procedure 103.

Fig. 1C shows in brief the post procedure which is initiated by the unlock procedure 110 in Fig. 1A.

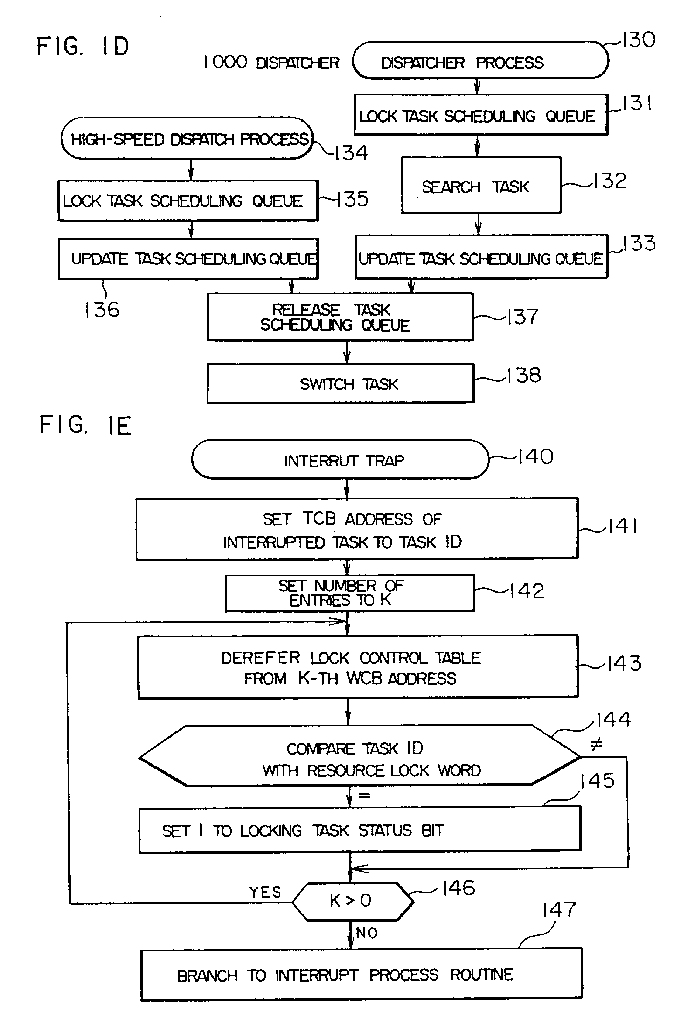

Fig. 1D shows in brief the processing of the dispatcher 1000 which is initiated by the wait procedure of Fig. 1B or post procedure of Fig. 1C.

Fig. 1E shows in brief the procedure which is carried out at the occurrence of an interrupt.

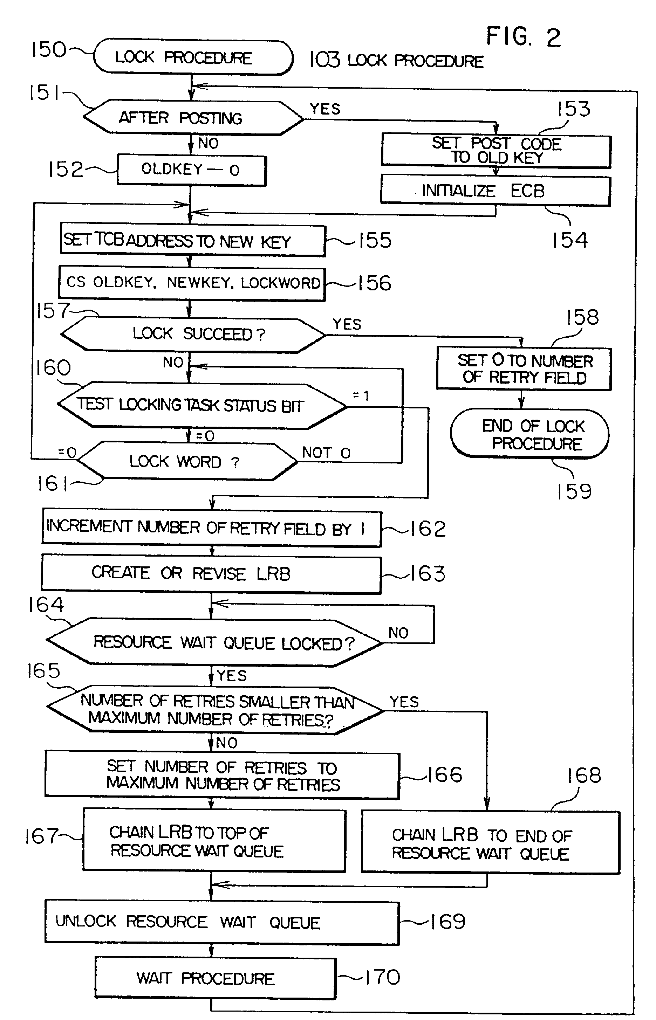

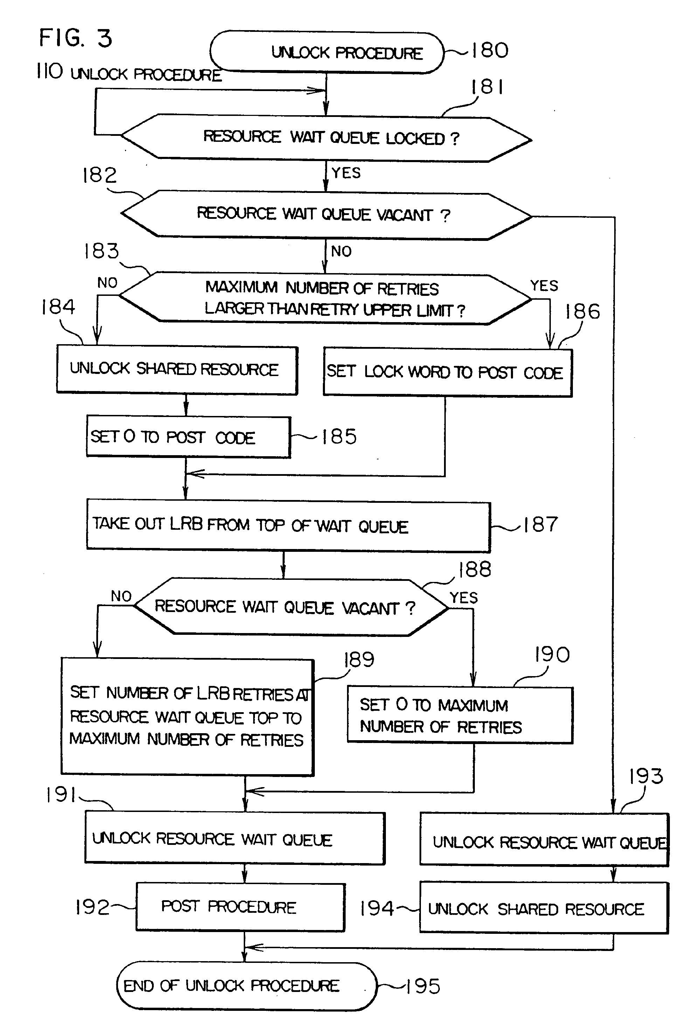

The details of the lock procedure 103 and unlock procedure 110 in Fig. 1A are shown in Figs. 2 and 3, respectively.

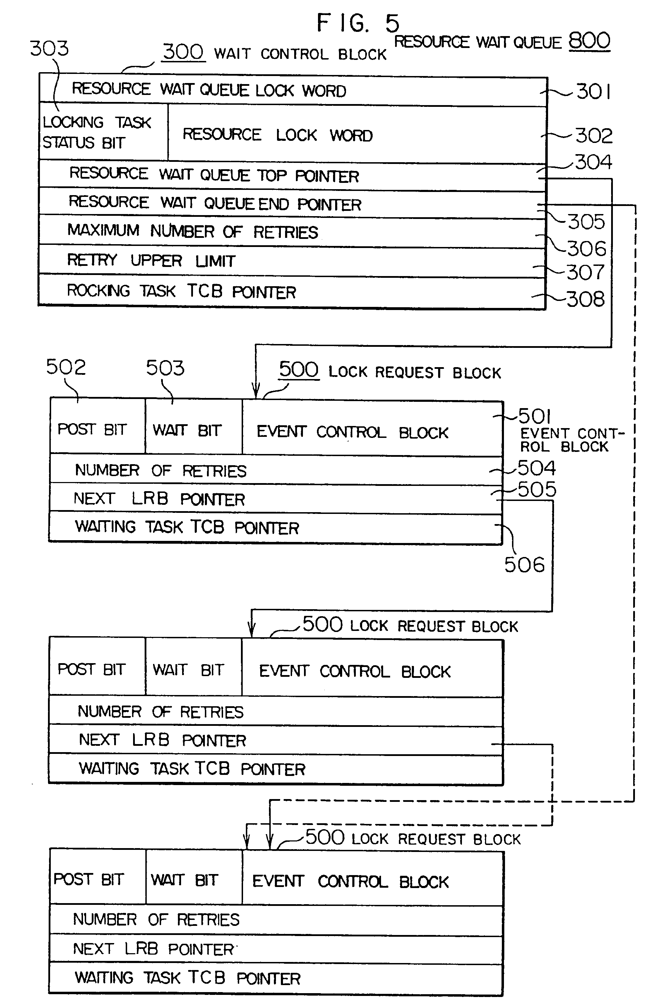

Features of this embodiment are as follows.
(a) At a time point when a post issue task ends the use of a shared resource, the shared resource is released: (step 114 in Fig. 1A), another task which is running on another processor is allowed to lock the shared resource, and thereafter the task is made ready: (step 115 in Fig. 1A). After that, the post procedure is initiated: (step 116 in Fig. 1A), and thereafter through a high-speed dispatch procedure (step 134-138 in Fig. 1D) a processor is granted first to a task which has failed to lock the shared resource, and the task (post receive task) is prompted to retry to lock the shared resource: (step 104 in Fig. 1A).
(b) This scheme, with its ability of minimizing the resource lock period, is advantageous in less possibility of inviting a degraded system throughput caused by lock contentions. On the other hand, a post receive task can lose the resource lock due to the presence of other task, and repetitive lock retries by a same task can lower the system response in some extent. This embodiment copes with the problem as follows. If one task fails to lock a shared resource even after several retries, it is allowed to lock the resource without letting the post issue task release the resource and the lock intending task (post receive task) is brought to ready state (the same procedure as the conventional one shown by steps 113, 115 and 116 in Fig. 1A takes place). Specifically, the number of retries of the post receive task is counted: (step 162 in Fig. 2), and when the number is below a certain upper limit, the shared resource is released at the time of the unlock procedure and the post procedure is initiated: (steps 183, 184, 185 in Fig. 3), and if the number exceeds the upper limit, the post procedure is initiated without releasing the shared resource as in the conventional case: (step 186 of Fig. 3). In short, when a post receive task fails to lock a shared resource after several requests or when it uses a specific resource, it is allowed to lock the resource without the release of the resource.
(c) As mentioned in the above item (b), when the conventional scheme is used, in which a post receive task is allowed to lock a resource at the time of post procedure, the post receive task now having the resource lock can possibly sink if it is not granted a processor. Since the resource locked by the post receive task is also locked by other task, it is kept locked. To cope with this problem in this embodiment, the execution of the post issue task is suspended by the post procedure: (step 122 in Fig. 1C) following the transition of the post receive task to ready state the post receive task is executed immediately on the processor: (step 123 in Fig. 1C).
(d) In order to suppress the increase in the overhead of dispatcher caused by task switch, according to this embodiment, the post receive task is made ready by the post procedure: (step 115 in Fig. 1A), the execution of the post issue task is suspended: (step 122 in Fig. 1C), control information pertinent to the post issue task is placed on the processor wait queue 900 in Fig. 5: (step 122 in Fig. 1C), and the processor which has been executing the post issue task is dispatched to the post receive task: (step 123 in Fig. 1C). More preferably, dispatching of the processor to the post receive task is carried out invariably as follows. At the time when a third task which has failed in resource lock is brought to wait state by the wait procedure following the registration on the processor wait queue, the control information for the post issue task registered on the processor wait queue is retrieved: (step 127 in Fig. 1B), and the processor which has been executing the third task is dispatched to the post issue task (step 128 in Fig. 1B), whereby the task search for dispatching is eliminated.
(e) In regard to the interrupt, when the execution of a locking task is suspended by an external interrupt or the like, information indicative of the discontinuity of the locking task is set immediately in the field (locking task status bit 303 in Fig. 5) which indicates the execution status of a locking task when a shared resource is locked: (step 145 in Fig. 1E), allowing a lock intending task to reference the information: (step 160 in Fig. 2) so that it attempts a resource lock with a spin lock mechanism if the locking task is running: (steps 155-161 in Fig. 2), or attempts a resource lock with a wait/post mechanism if the locking task is in preempted state: (steps 162-170 in Fig. 2). Consequently, in case a locking task is suspended by an interrupt or the like, other task in execution in another processor is prevented from being trapped in the spin loop, and the processor which has been executing the lock failing task is switched to a third task, whereby the system is operated efficiently.

The embodiment will now be described in detail.

### (2) Control data structure

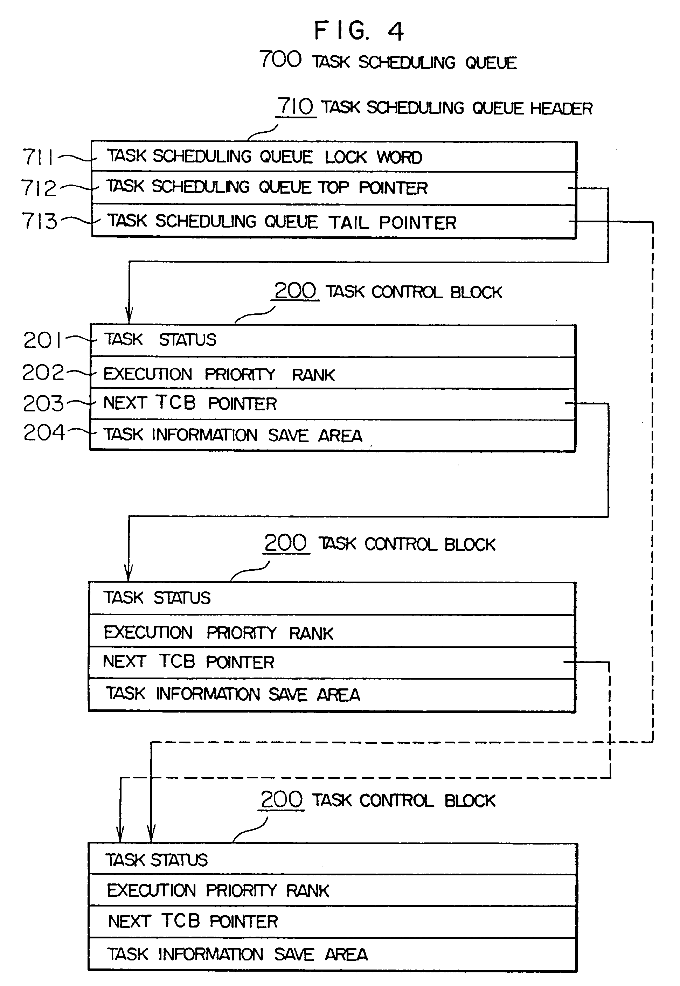

The following describes the data structure of various queues and control blocks which are stored in the shared memory 950 in Fig. 8 accessible by all processors in the system.
(2-1) Task scheduling queue
   A task scheduling queue 700, which manages information used for task control, is made up of a task scheduling queue header 710 and one or more task control blocks TCBs 200 chained to the header, as shown in Fig. 4. The task scheduling queue 700 is unique in the whole system. The task scheduling queue header 710 is made up of a task scheduling queue lock word 711, a task scheduling queue top pointer 712 and a task scheduling queue tail pointer 713. The task scheduling queue lock word 711 is used for the exclusive access control of the task scheduling queue itself. The task control blocks 200 store the following information.
   (a) Task status 201
      This field contains the state of a task (wait, ready, running or suspend).
   (b) Execution priority rank 202
      This field contains the execution priority rank of a task.
   (c) Next TCB pointer 203
      This field contains the address of the next TCB when TCBs are chained to form a task scheduling queue. The last TCB of the task scheduling queue has this field filled with zero.
   (d) Task information save area 204
      At the suspension of task execution, this area is used to save the contents of PSW (program status word), registers, etc. for the resumption of the suspended task.
(2-2) Resource wait queue
   A resource wait queue 800 is used to queuing tasks which have failed in resource lock, and it is provided for each shared resource. In structure, the resource wait queue is made up of a wait control block (WCB) 300 and one or more lock request blocks (LRBs) 500 chained to the WCB, as shown in Fig. 5.
   The wait control block 300 contains the following information.
   (a) Resource wait queue lock word 301
      This field is used for the mutual exclusion in revising the WCB itself. The field is set 1 during the occupancy of the WCB, and is reset to 0 when it becomes available.
   (b) Resource lock word 302
      This field indicates the locking status of the shared resource involved in mutual exclusion. A lock key is set to the field when the shared resource is locked, and it is reset to 0 when the resource is released. The lock key is an identifier unique to a locking task, and the TCB address is used for the lock key in this embodiment. The leading one bit of the resource lock word is used to indicate the status of the locking task. The locking task status bit 303 of 0 indicates that the locking task is running, and the locking task status bit of 1 indicates that the locking task is purged from the processor of the processor by an interrupt or the like.
   (c) Resource wait queue top pointer 304
      This field contains the address of the leading LRB on the resource wait queue. It is reset to 0 when the resource wait queue is vacant.
   (d) Resource wait queue tail pointer 305
      This field contains the address of the last LRB on the resource wait queue. It is reset to 0 when the resource wait queue is vacant.
   (e) Maximum retry count 306
      This field indicates the maximum value among retry counts of LRBs on the resource wait queue.
   (f) Retry upper limit 307
      This is a positive integer indicating the upper limit of the lock fail count.
   (g) Locking task TCB pointer 308
      This field contains the TCB address of a task which is locking a resource. The field is void when the resource is free.

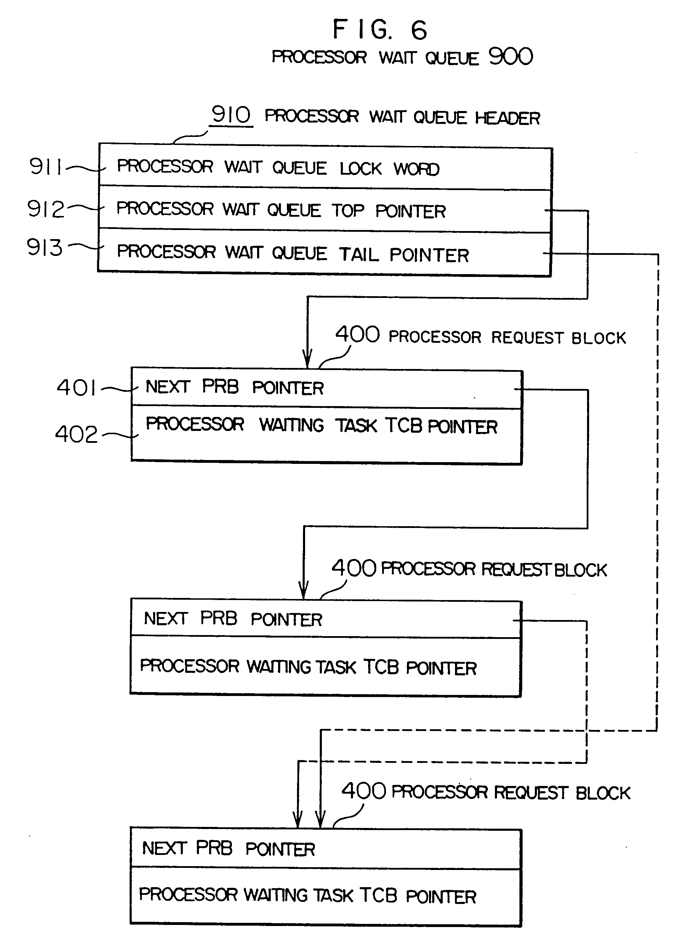

   The lock request block 500 contains the following information.
   (a) Event control block (ECB) 501
      Generally, in the wait/post mechanism, ECB denotes control information used to indicate occurrence of events among the post issue task and wait task. A post bit 502 of 0 indicates the event has not yet occurred and that of 1 indicates the occurrence of event. A wait bit 503 of 0 indicates that waiting of task has not yet occurred and that of 1 indicates the presence of waiting task. Whereas, in this embodiment, this block is used to notify the release of the resource. The post code field in ECB is used to transfer the lock key from a post issue task to a post receive task. For the lock key, refer to the above item for the WCB resource lock word.
   (b) Retry counter 504
      This counter indicates the number of lock failures by the task. The counter is cleared to zero when the task can lock a resource.
   (c) Next LRB pointer 505
      When LRBs are chained to form a resource wait queue, this field contains the address of the next LRB. The field is reset to 0 if the LRB is the last of the resource wait queue.
   (d) Wait task TCB pointer 506
      This field contains the TCB address of the waiting task which corresponds to this LRB.
(2-3) Processor wait queue
   A processor wait queue 900 registers tasks which have lost processors at the post issuance, and it is made up of a processor wait queue header 910 and one or more processor request blocks (PRBs) 400 chained to the header, as shown in Fig. 6. The processor wait queue 900 is unique in the whole system. The processor wait queue header 910 is made up of a processor wait queue lock word 911, processor wait queue top pointer 912 and a processor wait queue end pointer 913. The processor wait queue lock word 911 is used for the exclusive access control of the processor wait queue itself.
   The processor request block 400 contains the following information.
   (a) Next PRB pointer 401
      This pointer indicates the address of the next PRB when PRBs are chained to form a processor wait queue. If the PRB is the last of the processor wait queue, this field is reset to 0.
   (b) Processor waiting task TCB pointer 402
      This pointer indicates the TCB address of the processor waiting task which corresponds to this PRB.
(2-4) Lock scheduling table
   A lock scheduling table 600 is used by the interrupt trap routine shown in Fig. 1E at the occurrence of an interrupt for examining whether or not the interrupted task has been locking a resource. The table 600 is a stored array of pointers 602 to the WCBs of respective shared resources, and it is unique in the system.

### (3) Control algorism

(3-1) Lock management
   First, the lock procedure 103 and unlock procedure 110 will be explained on Fig. 1A, beginning with the lock procedure 103.
   A task which intends to lock a shared resource issues a lock macro 101 thereby to invoke the lock procedure routine 103. If the task fails to lock the intended resource because of it being locked by other task, the procedure branches to step 105. The step 105 examines whether the locking task is running or preempted. If the task is found running, it retries locking immediately. If it is preempted, the procedure branches to step 106, which selects the primary lock control mode (resource release with priority mode) or the second lock control mode in which the resource does not become available before the commencement of post procedure. Step 107 is for the resource release mode.
   Subsequently, the lock macro issuing task is enqueued on the resource wait queue 800: (step 108), and the wait procedure routine of Fig. 1B in the supervisor is invoked so that the task has its status field 201 in TCB 200 set to "wait". To enqueue the task in the resource wait queue 800 by step 108 is to create a LRB 500 which points TCB 200 of this task and chain it to LRBs 500 on the resource wait queue 800. The task which is now in wait state stays in this state until it is restored to ready state by a post procedure of Fig. 1C issued by other task.
   Next, the unlock procedure will be explained. A task which intends to release a shared resource issues an unlock macro 102 thereby to invoke the unlock procedure routine 110. The unlock procedure routine 110 examines whether any waiting task is registered on the resource wait queue 800: (step 111). If no waiting task exists, the system releases the resource: (step 112), and goes out of the routine. If any waiting task exists, the procedure branches to step 113, which selects the primary lock control mode (resource release with priority mode) in which the resource is released before the commencement of post procedure or the secondary lock control mode in which the resource is not released before the commencement of post procedure. If the resource release with priority mode is selected, the resource is released by step 114. Subsequently, a waiting task is dequeued from of the resource wait queue 800: (step 115), and the post procedure routine of Fig. 1C is invoked thereby to notify the release of the resource. To dequeue a task from the resource wait queue 800 (Fig. 5) by step 115 is to remove the lock request block LRB 500 which points the TCB of this task from the LRB chain 500 on the resource wait queue 200 so that it is rid of resource wait state and brought to processor wait state (ready state). In the case of resource release with advantage mode, the revised task can not always lock the resource, but becomes available wait state, as opposed to the conventional system.
(3-2) Dispatch procedure
   The dispatch procedure will be explained on figs. 1B to 1D.
   In the post procedure routine (Fig. 1C), 1 is set to the post bit 502 in the LRB 500 corresponding to the waiting task which has been dequeued from the resource wait queue 800 by step 115 in Fig. 1A. Next, the post issue task is brought from running state to ready state and enqueued to the processor wait queue 900: (step 122), and the high-speed dispatcher of Fig. 1D is invoked: (step 123) to dispatch a processor to the post receive task (i.e., the former waiting task), and it is brought to running state. To enqueue a task on the processor wait queue 900 by step 122 is to create a processor request block PRB 400 which points the TCB 200 of this task, and chains it to PRBs 400 on the processor wait queue 900. The processor-granted post receive task can now resume the procedure by locking the shared resource.
   In the wait procedure routine (Fig. 1B), an LRB 500 for the task which has issued the wait macro is created, and 1 is set to the wait bit 503 in the LRB. The routine next examines whether a processor waiting task, i.e., ready task, it registered on the processor wait queue 900: (step 126). If a ready task is found, it is dequeued from the processor wait queue 900: (step 127), and the high-speed dispatcher is invoked: (step 128) to dispatch a processor to this task and bring it running. To dequeue a task from the processor wait queue 900 by step 127 is to unchain the PRB 400 which points the TCB 200 of this task from PRBs 400 on the processor wait queue 900. If no ready task is found in step 126, the dispatcher is invoked: (step 129), and a task to be dispatched is selected from among ready tasks on the task scheduling queue and a processor is dispatched to it.
   The difference between the dispatch procedure and high-speed dispatch procedure shown in Fig. 1D is the presence or absence of a task search step 132. The task search step 132 is to search a TCB having a task ready state by dereferencing the chain of TCBs on the task scheduling queue 700. During the task search, the mutual exclusion of spin lock mode is carried out using the task scheduling queue lock word 711 so that another processor does not revise TCBs 200 chained on the task scheduling queue 700.
   The high-speed dispatch procedure does not include task search, and when it is called by the post procedure, it can immediately select a post receive task dequeued from the resource wait queue 800 by step 115. The reason is that LRBs 500 on the resource wait queue 800 and PRBs 400 on the processor wait queue 900 have individual pointers to TCBs 200 on the task control queue 700. By dereferencing the pointers, the TCB 200 for the LRB 500 dequeued from the resource wait queue 800 can be detected without searching the task control queue 700. The TCB 200 for the PRB 400 taken out of the processor wait queue 900 can also be detected without searching the task control queue 700. In the case of a call from the wait procedure, the post issue task dequeued from the processor wait queue 900 by step 127 can be selected promptly. Accordingly, in the post procedure (Fig. 1C), by granting a processor to the task (post receive task) corresponding to the LRB 500 taken out of the resource wait queue 800, the dispatch procedure (Fig. 1D) can take place without searching the task control queue 700. Similarly, in the wait procedure (Fig. 1B), by granting a processor to the task (post issue task) corresponding to the PRB 400 dequeued from the processor wait queue 900, the dispatch procedure (Fig. 1D) can take place without searching the task control queue 700. Application of the high-speed dispatch procedure reduces secondary lock contentions on the task scheduling queue.
(3-3) Interrupt control
   The interrupt procedure will be explained on Fig. 1E.
   When an interrupt arises at the end of input/output or the like, control is transferred to interrupt trap 140 in Fig. 1E. At first, step 141 detects the ID (TCB address) of the interrupted task: (step 141). Subsequently, by dereferencing WCB pointers 602 in the lock control table 602): (steps 142, 143), the ID (TCB address) of the interrupted task is compared with a lock key (TCB address of locking task) set in the resource lock word 302 of each WCB 300: (step 144). If both IDs are equal, the locking task status bit of the WCB 300 is set to 1: (step 144). Upon completion of this procedure for all entries of the lock control table, the procedure branches to the usual interrupt procedure routine: (steps 146, 147). The lock control table 600 contains pointers 602 to WCBs 300, and the resource lock word contains the TCB address, which corresponds to the locking task, as a lock key. Accordingly, the interrupt trap routine (Fig. 1E) can revise the locking task status bit 303 of the resource lock word 302 in correspondence to the interrupted task in a short time.
(3-4) Details of lock procedure and unlock procedure
   The following explains in more detail the lock management mechanism described in item (3-1). While a task is locking a shared resource, the task TCB address is set in the lock word, or it is reset to 0 when the task does not lock the resource. Since a TCB is created for each task, the TCB address is used as task identification information. The TCB address is used as the lock key in the following discussion.

First, the lock procedure 103 will be explained on Fig. 2. At first, after being posted by other task, a test step 151 determines whether or not the task status is after wait state based on the value of the post bit 502 in the ECB 501. If it is found posted, the old lock key, i.e., post code in ECB 501, is loaded into a register 1 (R1): (step 152). The post code contains identification information ID of the post issue task (TCB address of post issue task). Otherwise, 0 is loaded to the register 1: (step 153). Next, a new lock key, i.e., identification information ID of self task (TCB address of self task) is loaded into a register 2 (R2): (step 155). The decision procedure is carried out using the CS instruction as follows.
CS R1, R2, LOCKWORD

This instruction compares the value of lock word with the old lock key contained in the register 1, and if values are equal, the value of lock word is replaced with a new lock key contained in the register 2, i.e., lock success. If the above comparison does not match, the lock word replacement does not take place, i.e., lock failure. An important ability of the CS instruction is the inhibition of access to the lock word from other CPU over the period from reading of the lock word, comparison and to revision. On this account, an attempt of lock by a task results in failure except for the case where the resource is unlocked or the case where the value of the old lock key passed as a post code from the post issue task is equal to the current value (at execution of the CS instruction) of the lock word.

In the case of a successful lock by the decision step 157, step 158 resets the number of retry field to zero to complete the lock procedure. In the case of a lock failure, a retry is attempted immediately when the locking task status bit 303 is 0. Namely, with the bit 303 being 0, the procedure branches to step 161 and enters the spin loop 155-161. Step 161n tests the condition of the resource, and if it is found free, the procedure branches to the right for looping. If the resource is not yet released, the procedure branches to the left for looping. During the spin loop of steps 155-161, when the resource becomes available, the procedure branches to step 158, resulting in a lock success. With the locking task status bit 303 being 1, the procedure branches to step 162 and commences the suspending procedure. The number of retry field is incremented by one: (step 162), and the resource wait queue is locked: (step 164). While other task is locking the resource wait queue, the procedure loops until the procedure of the other task completes. Following a successful lock of the resource wait queue, the number of retry field is compared with the maximum number of retries: (step 165).

If number of retries is greater than or equal to the maximum number of retries, the maximum number of retries is updated: (step 166), and the LRB of the self task is chained to the top of the resource wait queue: (step 167).

If the number of retries is smaller than the maximum number of retries, the LRB of the self task is chained to the end of the resource wait queue: (step 168). After the LRB has been chained to the resource wait queue, the queue becomes available and the wait macro is invoked: (step 170). The task which has issued the wait macro enters wait state and stays in this state until it is posted, at which time the task returns to the procedure and attempts a resource lock.

The ECB is initialized (clear post bit) in step 154. In steps 167 and 168, the resource wait queue top pointer and resource wait queue tail pointer are used, instead of searching the resource wait queue, for the sake of reducing the lock period of the resource wait queue. Interrupt is disabled while the resource wait queue is locked for avoiding the occurrence of deadlock with the interrupt task.

Next, the unlock procedure 110 will be explained on Fig. 3. The first thing to be done in the unlock procedure is to lock the resource wait queue: (step 181). If other task is locking the resource wait queue, the procedure waits in the loop until it becomes available. After the resource wait queue is locked successfully, the vacancy of the resource wait queue 800, i.e., whether there exists a task which is waiting the release of the shared resource, is check: (step 182). If no waiting task exists, the resource wait queue 800 and shared resource are released by resetting the lock word to 0: (steps 193, 194).

If, on the other hand, there is a waiting task, the maximum number of retry field is compared with the retry upper limit: (step 183). If the maximum number of retries is smaller than the retry upper limit, i.e., if the number of lock failures is below the upper limit, the shared resource is released: (step 184), and the post code is set 0: (step 185). If the maximum number of retries is greater than or equal to the retry upper limit, i.e., if the number of lock failures reaches the upper limit, the current lock key, i.e., the identification information (TCB address) of the current locking task is set to the post code: (step 196). Subsequently, the LRB at the top of the resource wait queue is taken out: (step 187), the maximum number of retries is updated: (steps 189, 190), the resource wait queue is released: (step 191), a post macro is issued to the task corresponding to the LRB 500 taken out in step 187: (step 192), and the release of the shared resource is notified. At this time, the post code which has been set in step 185 or 186 is passed to the post receive task. The post code is received by the post receive task in step 153 (Fig. 2). According to this mechanism, when the number of lock failures is less than the upper limit value, the shared resource released by step 184 is offered among the post receive task and other tasks on a first-come-first-served basis. However, if the number of lock failures is beyond the upper limit value, the shared resource is not released at the post issue task, but the post receive task is allowed directly to lock the resource.

### (4) Features of the embodiment

The following describes in detail the features of this embodiment.
(a) In the conventional mechanism, when a task 1 which has been locking a shared resource ends the use, it does not release the shared resource, but it posts a waiting task 2, and during the period until the task 2 runs again on CPU 2, another lock-intending task 3 in execution on CPU 3 fails to lock the resource, as described on Fig. 9. According to this embodiment, at the time point when a post issue task ends the use of a shared resource, it releases the shared resource: (step 114 in Fig. 1A), allows other task running on another processor to lock the shared resource, and then post issue task is brought to ready state: (step 115 in Fig. 1A). After that, the post procedure is initiated: (step 115 in Fig. 1A), and through the high-speed dispatch procedure (steps 134-138 in Fig. 1D) a processor is granted to a task which has failed to lock the resource previously and the task (post receive task) is prompted to retry the lock of the shared resource.
   Accordingly, the task 1 releases the shared resource prior to (at time point t₃) the post procedure commencement (at t₅), and during the period after the task 2 which had entered wait state at t₄ has been posted by the task 1 until it is ready again on CPU 1 (between t₅-t₇), other task 3 in execution on CPU 3 can lock the shared resource (at t₆). As a result, the number of wait procedures and post procedures can be reduced.
(b) This mechanism is capable of minimizing the resource lock period, and is therefore advantageous in preventing a degraded throughput caused by lock contentions. However, before a post receive task locks a shared resource, it can be locked by other task, resulting possibly in a recursive lock failure. This causes a same task to have a iteration of retry, and the system response can be deteriorated to some extent. This problem is overcome by this embodiment as follows.
   In case a same task fails to lock a shared resource as a result of iterative retries, the task is allowed to lock the resource without the release of the resource, and the task (post receive task) is brought to ready, as in the conventional mechanism (steps 113, 115 and 116 in Fig. 1A). Specifically, the number of retries attempted by the post receive task is counted: (step 162 in Fig. 2), and if the number is below the upper limit value, the shared resource becomes available and the post procedure is initiated at the execution of unlock procedure: (steps 183, 184 and 185 in Fig. 3). If the number of retries reaches or is beyond the upper limit, the post procedure is initiated without releasing the shared resource: (step 186 in Fig. 3), as in the conventional mechanism. Namely, if a post receive task fails to lock a shared resource after repeated requests, or when a specific resource is used, the post receive task is allowed to lock the shared resource without release.
   For a lock fail rate (the probability of failure in lock attempts) of β and a retry upper limit value of N, the probability of N-time recursive lock failures is β^{N}. Since β ranges between 0 and 1 (0 < β < 1), the value of β^{N} is sufficiently small. Accordingly, it becomes possible to minimize the probability (β^{N}) of resource lock over the period after the commencement of post procedure until the reentry of the task 2 in running state following its retries over the upper limit value, and at the same time to maintain the number of retries by the task 2 N times or lower.
(c) As described above in item (b), in using the conventional mechanism in which the post receive task is allowed to lock a shared resource at the time of post procedure, the post receive task can sink, i.e., it is not granted a processor while even having a resource lock. In this case, the resource is kept locked by the task, and other task cannot use it. To cope with this problem in this embodiment, after the post receive task has been brought running by the post procedure, the execution of the post issue task is preempted: (step 122 in Fig. 1C) and the post receive task is executed immediately on that processor: (step 123 in Fig. 1C).

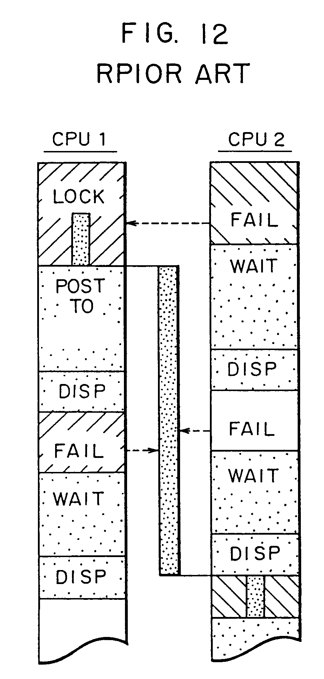

   Fig. 12 shows an example of the operation, based on the conventional mechanism, after the task 2 running on CPU 2 has failed to lock a shared resource because of it being locked by the task 1 running on CPU 1. It is assumed that CPU 1 is dispatched to the task 1 again during the period until the task 2 which has been posted by the task 1 is dispatched. During this period, the task 1 or a task 3 running on CPU 2 will fail to lock the shared resource if it is attempted.

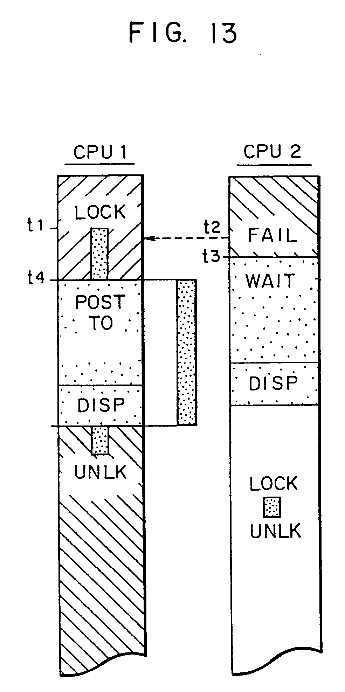

   Fig. 13 shows an example of the operation according to this embodiment for the same case as of Fig. 12. After the post procedure has ended, the task 2 is dispatched selectively (at t₅) and executed on CPU 1, and therefore the period after the commencement of post procedure until the dispatch of task 2 (between t₄ and t₅) can be reduced. Consequently, the time of unlocking the resource by the task 2 following its execution can also be made earlier, and other task running on another processor can have the opportunity of resource lock at an earlier time point.
(d) In order to retard the increase in the overhead of dispatchers caused by task switch, according to this embodiment, the post receive task is made ready by the post procedure: (step 115 in Fig. 1A), the execution of the post issue task is preempted: (step 122 in Fig. 1C), control information pertinent to the post issue task is placed on the processor wait queue 900 in Fig. 5: (step 122 in Fig. 1C), and the processor which has been executing the post issue task is dispatched to the post receive task: (step 123 in Fig. 1C). More preferably, dispatching of the processor to the post receive task is carried out invariably as follows. At the time when a third task which has failed in resource lock is brought to wait state by the wait procedure following the registration on the processor wait queue, the control information for the post issue task registered on the processor wait queue is retrieved: (step 127 in Fig. 1B), and the processor which has been executing the third task is dispatched to the post issue task (step 128 in Fig. 1B). Accordingly, the task search does not take place in this dispatch procedure, as has been explained previously. Consequently, the lock period of the task scheduling queue in the dispatch procedure is reduced, and overhead attributable to lock contentions on the task scheduling queue can be reduced.
(e) In regard to the interrupt, when the execution of a locking task is suspended by an external interrupt or the like, information indicative of the suspension of the locking task is set immediately in the field (locking task status bit 303 in Fig. 5) which indicates the execution status of a locking task when a shared resource is locked: (step 145 in Fig. 1E), allowing a lock intending task to reference the information: (step 160 in Fig. 2) so that it attempts a resource lock with a spin lock mechanism if the locking task is running: (steps 155-161 in Fig. 2), or attempts a resource lock with a wait/post mechanism if the locking task is in preempted state: (steps 162-170 in Fig. 2).

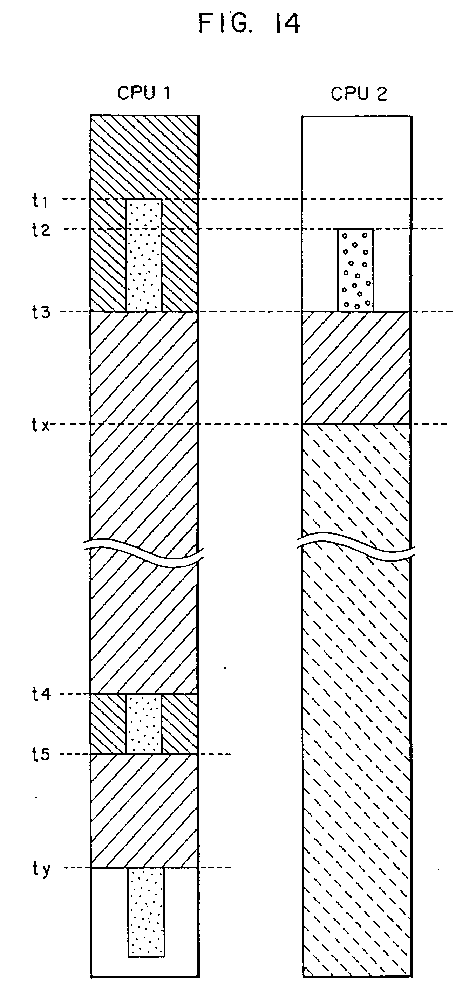

Fig. 10 is a timing chart showing the operation at the occurrence of an interrupt according to the conventional mechanism described previously. During the period from t₃ to t₄ when the task 1 is preempted by an interrupt, the CPU 2 continues to spin by occupying CPU 2. Whereas according to this embodiment, as shown in Fig. 14, when the task 1 is interrupted at t₃, the interrupt trap sets the locking task status bit 303 in Figs. 5 to 1. Then the task 2 which has been spinning since t₂ detects the transition of the locking task status bit to 1 and invokes the wait procedure to pass the CPU 2 to the task 3. Consequently, the CPU 2 can execute the task 3 after time point tₓ.

As described, the problem of spin loop trap of the task 2 running on CPU 2 in the event of the preempting of the locking task 1 due to an interrupt or the like is eliminated, and the CPU 2 swaps the task from the lock-failing task 2 to another task 3, whereby the system is operated efficiently.

### (5) Variant embodiments

Alternative techniques conceivable to replace the foregoing method which intends to reduce the overhead of dispatchers by reduced task search are as follows
<1> Before the wait procedure brings a post receive task to wait state, alteration of priority order is implemented so that the post receive task has a higher execution rank, and the original priority order is restored at the release of the shared resource used by the post receive task.
<2> Before a post issue task brings a post receive task out of wait state by the post procedure, alteration of priority order is implemented so that the post receive task has a higher execution rank, and the original priority order is restored at the release of the shared resource used by the post receive task.

These methods can readily be carried out by modifications of the foregoing embodiment, and the further detailed explanation thereof will be omitted.

As will be appreciated from the above description, the embodiment of this invention offers the following effectiveness.
(1) By controlling shared resource lock requests with the wait/post mechanism, the post procedure overhead is eliminated from the shared resource lock period, and the increase in the number of retries by a post receive task is held below a certain upper limit value, whereby the aggravation of system response is prevented.
(2) In the dispatch procedure following a post procedure or wait procedure, task search for the next dispatching is eliminated, and lock contentions on the task scheduling queue can be reduced. Namely, by the high-speed dispatch procedure in which, following the post procedure, the processor is dispatched to the task registered on the resource wait queue, and, following the wait procedure, the task registered on the processor is dispatched to the task registered on the processor wait queue, whereby the task search procedure for searching the task scheduling queue for a task to be dispatch next can be eliminated.
(3) The increase in the lock management overhead is held lower even at the occurrence of an interrupt against a shared resource locking task, and this is effective for the enhancement of the system throughput property. Particularly, the inventive method, which maintain a lower proportion of lock procedure over the entire procedure, is effective for the enhancement of system performance.

## Claims

1. A task execution control method for a multiprocessor system comprising the steps of:
(a) trying by a first task, running on one of the multiple processors (951, 952), to lock a resource (950) shared by tasks for exclusive use by said first task when the task requires use of the resource;
(b) keeping running the first task if the task has locked said shared resource (950) successfully;
(c) suspending execution of the first task and placing the first task into a waiting state for release of said shared resource (950), if the task has failed to lock the shared resource;
(d) transiting, when the first task ceases to use the shared resource (950), at least a second task which is in the waiting state for release of the shared resource, to a state of waiting to the availability of a processor (951; 952); and
(e) selecting a task from among the second tasks and running the selected task on one of the multiple processors (951; 952), when the first task terminates execution or is suspended;
wherein said method is **characterized** by the steps of:
(f) releasing the shared resource (950) so that a running third task can lock the shared resource, when the first task ends use of the shared resource and the second task is transited to the state waiting for the availability of a processor (951; 952); and
(g) retrying, by the second task, to lock the shared resource (950), when the second task runs on one of the multiple processors (951; 952).

2. A task execution control method according to claim 1, wherein said step (f) of releasing the shared resource further comprises the steps of: judging whether a history of retry of the second task satisfies a certain condition or not; and, instead of releasing the shared resource and transiting the second task to the state waiting for the availability of a processor, if the condition is met, keeping locked the shared resource with the second task instead of releasing the shared resource.

3. A task execution control method according to claim 2, wherein said condition is that a total amount of lock failure amounts to a certain value.

4. A task execution control method according to claim 1, wherein said method further comprises the steps of:
suspending execution of a running first task when the first task ceases to use the shared resource and a second task which is in the waiting state for release of the shared resource is brought into a state waiting for the availability of a processor; and
executing said second task with priority on one of the processors on which said first task has been running.

5. A task execution control method according to claim 1, wherein said method further comprises the steps of:
altering an original execution priority rank of a task to a higher rank if the task has failed to lock the shared resource, and thereafter, transiting said task to the waiting state for release of the resource;
selecting a task to be run from among tasks in a state waiting for the availability of a processor in accordance with the execution priority ranks of the tasks; and
restoring the execution priority rank of said task having an altered execution priority rank to an original rank if the task is selected to run after locking the shared resource.

6. A task execution control method according to claim 1, wherein said method further comprises the steps of:
when the first task locking the shared resource ceases to use the shared resource, altering an execution priority rank of a second task which is in the waiting state for the release of the shared resource to a higher rank and, thereafter, transiting said second task to the state waiting for the availability of a processor;
selecting a task to be run from among the second tasks in accordance with the execution priority ranks of the tasks; and
restoring the execution priority rank of said second task having an altered execution priority rank to the original rank if the second task is selected to run after locking the shared resource.

7. A task execution control method according to claim 4, further comprising the step of executing said first task with priority on one of the processors, when said task running on the one processor terminates or is suspended.

8. A task execution control method according to claim 1, further comprising the steps of:
storing information indicative of interception of the task locking the shared resource if the task is intercepted due to an interrupt generated in a processor on which said task has been running;
examining whether or not said information is stored, when an other task try to lock the shared resource; and
retrying locking of the shared resource by the other task without transiting to the waiting state for release of the resource if said information is not stored and, at the same time, if said other task has failed to lock the shared resource.

## Patentansprüche

1. Aufgabenausführungssteuerverfahren für ein Multiprozessorsystem, mit den Schritten
(a) des Versuchens, durch eine erste Aufgabe, die auf einem aus der Anzahl von Prozessoren (951, 952) läuft, eine Ressource (950), die von mehreren Aufgaben geteilt wird, für den exklusiven Gebrauch durch die erste Aufgabe zu sperren, wenn die Aufgabe den Gebrauch der Ressource erfordert;
(b) des weiteren Ausführens der ersten Aufgabe, wenn die Aufgabe die Gemeinschaftsressource (950) erfolgreich gesperrt hat;
(c) des Aussetzens der Ausführung der ersten Aufgabe und des Verbringens der ersten Aufgabe in einen Wartezustand für die Freigabe der Gemeinschaftsressource (950), wenn die Aufgabe die Gemeinschaftsressource nicht sperren konnte;
(d) des Überführens, wenn die erste Aufgabe mit dem Gebrauch der Gemeinschaftsressource (950) zu Ende kommt, wenigstens einer zweiten Aufgabe, die sich im Wartezustand für die Freigabe der Gemeinschaftsressource befindet, in einen Zustand des Wartens auf die Verfügbarkeit eines Prozessors (951; 952); und
(e) des Auswählens einer Aufgabe aus den zweiten Aufgaben und des Ausführens der ausgewählten Aufgabe auf einem aus der Anzahl von Prozessoren (951; 951), wenn die erste Aufgabe die Ausführung beendet hat oder ausgesetzt wird;
wobei das Verfahren **gekennzeichnet** ist durch die Schritte
(f) des Freigebens der Gemeinschaftsressource (950), so daß eine laufende dritte Aufgabe die Gemeinschaftsressource sperren kann, wenn die erste Aufgabe den Gebrauch der Gemeinschaftsressource beendet und die zweite Aufgabe in den Zustand des Wartens auf die Verfügbarkeit eines Prozessors (951; 952) überführt wurde; und
(g) des erneuten Versuchens, durch die zweite Aufgabe, des Sperrens der Gemeinschaftsressource (950), wenn die zweite Aufgabe auf einem aus der Anzahl von Prozessoren (951; 952) läuft.

2. Aufgabenausführungssteuerverfahren nach Anspruch 1, wobei der Schritt (f) des Freigebens der Gemeinschaftsressource des weiteren die Schritte des Feststellens, ob eine Liste der erneuten Versuche der zweiten Aufgabe eine bestimmte Bedingung erfüllt oder nicht; und, anstelle des Freigebens der Gemeinschaftsressource und des Überführens der zweiten Aufgabe in den Zustand des Wartens auf die Verfügbarkeit eines Prozessors, des Gesperrthaltens der Gemeinschaftsressource für die zweite Aufgabe anstelle des Freigebens der Gemeinschaftsressource umfaßt, wenn die Bedingung erfüllt ist.

3. Aufgabenausführungssteuerverfahren nach Anspruch 2, wobei die Bedingung die ist, daß die Gesamtzahl der erfolglosen Sperrversuche einen bestimmten Wert übersteigt.

4. Aufgabenausführungssteuerverfahren nach Anspruch 1, wobei das Verfahren des weiteren die Schritte
des Aussetzens der Ausführung einer laufenden ersten Aufgabe, wenn die erste Aufgabe mit dem Gebrauch der Gemeinschaftsressource zu Ende kommt und eine zweite Aufgabe, die sich im Wartezustand für die Freigabe der Gemeinschaftsressource befindet, in den Zustand des Wartens auf die Verfügbarkeit eines Prozessors gebracht wird; und
des Ausführens der zweiten Aufgabe mit Priorität auf einem der Prozessoren umfaßt, auf denen die erste Aufgabe gelaufen ist.

5. Aufgabenausführungssteuerverfahren nach Anspruch 1, wobei das Verfahren des weiteren die Schritte
des Änderns eines ursprünglichen Ausführungsprioritätsranges einer Aufgabe in einen höheren Rang, wenn die Aufgabe die Gemeinschaftsressource nicht sperren konnte, und danach des Überführens der Aufgabe in den Wartezustand für die Freigabe der Ressource;
des Auswählens einer auszuführenden Aufgabe aus den Aufgaben, die sich im Zustand der Wartens auf die Verfügbarkeit eines Prozessors befinden, entsprechend des Ausführungsprioritätsranges der Aufgaben; und
des Wiederherstellens des Ausführungsprioritätsranges der Aufgabe mit dem geänderten Ausführungsprioritätsrang in den ursprünglichen Rang umfaßt, wenn die Aufgabe nach dem Sperren der Gemeinschaftsressource zur Ausführung ausgewählt wird.

6. Aufgabenausführungssteuerverfahren nach Anspruch 1, wobei das Verfahren des weiteren die Schritte
des Änderns des Ausführungsprioritätsranges einer zweiten Aufgabe, die sich im Wartezustand für die Freigabe der Gemeinschaftsressource befindet, in einen höheren Rang, und danach des Überführens der zweiten Aufgabe in den Zustand des Wartens auf die Verfügbarkeit eines Prozessors, wenn die erste Aufgabe, die die Gemeinschaftsressource sperrt, mit dem Gebrauch der Gemeinschaftsressource zu Ende kommt;
des Auswählens einer auszuführenden Aufgabe aus den zweiten Aufgaben entsprechend des Ausführungsprioritätsranges der Aufgaben; und
des Wiederherstellens des Ausführungsprioritätsranges der zweiten Aufgabe mit dem geänderten Ausführungsprioritätsrang in den ursprünglichen Rang umfaßt, wenn die zweite Aufgabe nach dem Sperren der Gemeinschaftsressource zur Ausführung ausgewählt wird.

7. Aufgabenausführungssteuerverfahren nach Anspruch 4, mit dem Schritt des Ausführens der ersten Aufgabe mit Priorität auf einem der Prozessoren, wenn die Aufgabe, die auf diesem Prozessor läuft, beendet ist oder ausgesetzt wird.

8. Aufgabenausführungssteuerverfahren nach Anspruch 1, mit den weiteren Schritten
des Speicherns von Informationen, die das Unterbrechen der Aufgabe anzeigen, die die Gemeinschaftsressource sperrt, wenn die Aufgabe durch einen Interrupt unterbrochen wird, der von einem Prozessor erzeugt wird, auf dem die Aufgabe gelaufen ist;
des Überprüfens, ob eine solche Information gespeichert ist oder nicht, wenn eine andere Aufgabe versucht, die Gemeinschaftsressource zu sperren; und
des erneuten Versuchens des Sperrens der Gemeinschaftsressource durch die andere Aufgabe, ohne daß in den Wartezustand für die Freigabe der Ressource übergegangen wird, wenn keine solche Information gespeichert ist und gleichzeitig die andere Aufgabe die Gemeinschaftsressource nicht sperren konnte.

## Revendications

1. Procédé de commande d'exécution de tâche pour un système à processeurs multiples comportant les étapes consistant à :
(a) tenter, par une première tâche se déroulant sur l'un des processeurs multiples (951, 952), de verrouiller une ressource (950) partagée par des tâches pour une utilisation exclusive par ladite première tâche lorsque la tâche exige une utilisation de la ressource;
(b) maintenir le déroulement de la première tâche si la tâche a verrouillé ladite ressource partagée (950) avec succès;
(c) suspendre l'exécution de la première tâche et placer la première tâche en état d'attente pour une libération de ladite ressource partagée (950), si la tâche n'a pas réussi à verrouiller la ressource partagée;
(d) passer, lorsque la première tâche cesse d'utiliser la ressource partagée (950), à au moins une seconde tâche, qui se trouve en état d'attente d'une libération de la ressource partagée, à un état d'attente de la disponibilité d'un processeur (951; 952); et
(e) sélectionner une tâche parmi les secondes tâches et dérouler la tâche sélectionnée sur l'un des processeurs multiples (951; 952), lorsque la première tâche termine son exécution ou est suspendue;
ledit procédé étant caractérisé par les étapes consistant à :
(f) libérer la ressource partagée (950), de sorte qu'une troisième tâche en cours de déroulement peut verrouiller la ressource partagée, lorsque la première tâche met fin à l'utilisation de la ressource partagée et lorsque la seconde tâche est placée dans un état d'attente de la disponibilité d'un processeur (951; 952); et
(g)tenter à nouveau par la seconde tâche, de verrouiller la ressource partagée (950), lorsque la seconde tâche se déroule sur l'un des processeurs multiples (951; 952).

2. Dispositif de commande d'exécution de tâche selon la revendication 1, dans lequel ladite étape (f) de libération de la ressource partagée comporte en outre les étapes consistant à :
évaluer si un historique de relance de la seconde tâche satisfait à une certaine condition ou non; et, au lieu de libérer la ressource partagée et de transférer la seconde tâche dans l'état d'attente de la disponibilité d'un processeur, si la condition est satisfaite, maintenir verrouillée la ressource partagée avec la seconde tâche au lieu de libérer la ressource partagée.

3. Procédé de commande d'exécution de tâche selon la revendication 2, dans lequel ladite condition est telle qu'une quantité totale de défauts de verrouillage s'élève à une certaine valeur.

4. Procédé de commande d'exécution de tâche selon la revendication 1, dans lequel ledit procédé comporte en outre les étapes consistant à :
suspendre l'exécution d'une première tâche en cours de déroulement lorsque la première tâche cesse d'utiliser la ressource partagée et qu'une seconde tâche qui se trouve dans l'état d'attente de libération de la ressource partagée est amenée dans un état d'attente de la disponibilité d'un processeur; et
exécuter ladite seconde tâche avec priorité sur l'un des processeurs sur lequel ladite première tâche s'est déroulée.

5. Procédé de commande d'exécution de tâche selon la revendication 1, dans lequel ledit procédé comporte en outre les étapes consistant à :
modifier un classement de priorité d'exécution initial d'une tâche à un classement supérieur si la tâche n'a pas réussi à verrouiller la ressource partagée, et ensuite, placer ladite tâche dans l'état d'attente d'une libération de la ressource;
sélectionner une tâche à dérouler parmi des tâche dans un état d'attente de la disponibilité d'un processeur selon les classements de priorité d'exécution des tâches; et
rétablir le classement de priorité d'exécution de ladite tâche ayant un classement de priorité d'exécution modifié à un classement initial si la tâche est choisie pour se dérouler après verrouillage de la ressource partagée.

6. Procédé de commande d'exécution de tâche selon la revendication 1, dans lequel ledit procédé comporte en outre les étapes consistant à :
lorsque la première tâche verrouillant la ressource partagée cesse d'utiliser la ressource partagée, modifier un classement de priorité d'exécution d'une seconde tâche qui se trouve dans l'état d'attente de libération de la ressource partagée à un classement supérieur et, ensuite, transférer ladite seconde tâche dans l'état d'attente de la disponibilité d'un processeur;
sélectionner une tâche à accomplir parmi les secondes tâches conformément aux classements de priorité d'exécution des tâches; et
rétablir le classement de priorité d'exécution de ladite seconde tâche ayant un classement de priorité d'exécution modifié au classement initial si la seconde tâche est choisie pour se dérouler après verrouillage de la ressource partagée.

7. Procédé de commande d'exécution de tâche selon la revendication 4, comportant en outre l'étape d'exécution de ladite première tâche avec priorité sur l'un des processeurs, lorsque ladite tâche se déroulant sur ledit processeur prend fin ou est suspendue.

8. Procédé de commande d'exécution de tâche selon la revendication 1, comportant en outre les étapes consistant à :
mémoriser une information représentative d'une interception de la tâche verrouillant la ressource partagée, si la tâche est interceptée par suite d'une interruption générée dans un processeur sur lequel ladite tâche s'est déroulée;
examiner si oui ou non ladite information est mémorisée, lorsqu'une autre tâche tente de verrouiller la ressource partagée; et
réessayer un verrouillage de la ressource partagée par l'autre tâche sans passage à l'état d'attente de la libération de la ressource si ladite information n'est pas mémorisée et, simultanément, si ladite autre tâche n'a pas réussi à verrouiller la ressource partagée.
